# EUROPÄISCHE PATENTSCHRIFT

(11) **EP 3 210 861 B1**
(45) Veröffentlichungstag und Bekanntmachung des Hinweises auf die Patenterteilung: **13.02.2019**
(21) Anmeldenummer: 16157610.3
(22) Anmeldetag: 26.02.2016
(51) Int. Cl.: B62D 33/04

(54) **PANEEL UND AUFBAU EINES NUTZFAHRZEUGS MIT EINER ENTLÜFTUNGSEINRICHTUNG**
PANEL AND ASSEMBLY OF A COMMERCIAL VEHICLE WITH A VENTILATION DEVICE
PANNEAU ET ASSEMBLAGE D'UN VEHICULE UTILITAIRE COMPRENANT UN DISPOSITIF D'AERATION

(43) Veröffentlichungstag der Anmeldung: 30.08.2017
(73) Patentinhaber: Schmitz Cargobull AG, 48341 Altenberge (DE)
(72) Erfinder: Westhoff, Ludger, 46354 Südlohn (DE)
(74) Vertreter: Cohausz & Florack

(56) Entgegenhaltungen:
- EP-A1- 0 607 575
- EP-A1- 2 116 449
- DE-U- 1 933 968
- DE-U1-202010 011 049

## Beschreibung

Die Erfindung betrifft ein Paneel für einen Aufbau eines Nutzfahrzeugs, insbesondere eines Lastkraftwagens, Anhängers oder Sattelaufliegers, mit zwei Decklagen, einer Kernlage aus einem geschäumten Kunststoff, wenigstens einem Randprofil an wenigstens einer Schmalseite des Paneels und wenigstens einer mit dem Randprofil verbundenen Entlüftungseinrichtung zum Entlüften des Paneels beim Ausschäumen des Kunststoffs. Ferner betrifft die Erfindung einen Aufbau eines Nutzfahrzeugs, insbesondere eines Lastkraftwagens, Anhängers oder Sattelaufliegers, mit einem solchen Paneel und mit einem mit dem Paneel verbundenen weiteren Paneel und/oder Anbauteil.

Nutzfahrzeuge der vorgenannten Art können beispielsweise Lastkraftwagen, Anhänger oder Sattelauflieger sein. Dabei sind die Nutzfahrzeuge insbesondere für den Transport von Gütern, wie Stückgütern, im öffentlichen Straßenverkehr vorgesehen. Zu diesem Zweck weisen die Nutzfahrzeuge unterschiedliche Arten von Aufbauten auf, welche Laderäume zur Aufnahme der zu transportierenden Güter bereitstellen. Es sind beispielsweise sogenannte Planenaufbauten bekannt, welche wenigstens eine Plane zum Verschließen wenigstens einer Seite und/oder des Dachs des Planenaufbaus aufweisen. Wenn die Plane entlang der Seitenwand verschoben werden kann, spricht man auch von sogenannten Curtainsidern.

Bei sogenannten Kofferaufbauten sind dagegen die Seitenwände und das Dach durch feste Wände verschlossen. Auch die Stirnwand ist bei Kofferaufbauten typischerweise als feste Wand ausgebildet, während die Rückwand meist aus zwei Flügeltüren, einem Rolltor oder dergleichen gebildet wird, um den Kofferaufbau von hinten beladen zu können. Die Seitenwände, das Dach und die Stirnwand von Kofferaufbauten sind in der Regel in Form von mehrschichtigen Paneelen aufgebaut, die eine innere strukturgebende Decklage, eine äußere strukturgebende Decklage und eine Kernlage aus einem geschäumten Kunststoff umfassen. Die Decklagen können selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und infolge der Kernlage aus geschäumtem Kunststoff eine hohe thermische Isolation bereitstellen, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Die Kernlage kann beispielsweise zunächst geschäumt und dann in Form einzelner Elemente oder Kunststoffblöcke zwischen den Decklagen des Paneels positioniert werden. Es kann aber auch der noch nicht ausgehärtete Kunststoff zwischen die Decklagen des Paneels geleitet werden, der das Innere des Paneels wenigstens zum Teil ausschäumt. Um die Kernlage gegen äußere Einwirkungen, insbesondere das Eindringen von Feuchtigkeit in den geschäumten Kunststoff, zu schützen, weisen die bekannten Paneele regelmäßig an den Rändern der Decklagen umlaufende Randprofile auf, die mit den Rändern der Decklagen verbunden sein können, um so die Schmalseiten des Paneels zu verschließen. Dies ist insbesondere für durch Kunststoff ausgeschäumte Paneele der Fall. Durch die vor dem Ausschäumen vorgesehenen Randprofile können die Decklagen im gewünschten Abstand zueinander positioniert werden. Außerdem verhindern die Randprofile das Austreten von Kunststoff an den entsprechenden Schmalseiten der zu fertigenden Paneele. Die Randprofile und die Decklagen können mithin die Form für den auszuschäumenden Kunststoff bilden, der den darin verbleibenden Freiraum nach dem Schäumen mehr oder weniger vollständig ausfüllen kann.

Beim Ausschäumen des Paneels dehnt sich der Kunststoff immer mehr aus und verdrängt dabei die ursprünglich in den Freiraum zwischen den Decklagen und den Randprofilen vorhandene Luft, jedenfalls zu einem Großteil. Die Luft muss also über Öffnungen bzw. für diesen Zweck vorgesehene Strömungskanäle aus dem Paneel abgeleitet werden. Ein Austreten des Kunststoffs ist jedoch unerwünscht. Daher wird versucht, genau so viel Kunststoff in die Paneele einzubringen, dass die Paneele einerseits möglichst vollständig ausgeschäumt werden und andererseits kein überschüssiger Kunststoff vorhanden ist. Da die Volumenvergrößerung des Kunststoffs beim Ausschäumen von einer ganzen Reihe von Faktoren abhängt, die, wenn überhaupt, nur teilweise beeinflusst werden können, ist es nicht möglich, die benötigte Menge an Kunststoff jeweils genau vorherzubestimmen bzw. exakt zu dosieren. Vor diesem Hintergrund ist bisher bedarfsweise bewusst in Kauf genommen worden, dass der Freiraum des Paneels zwischen den Decklagen und den Randprofilen nicht gänzlich ausgeschäumt wurde, um ein Puffervolumen für etwaig überschüssigen Kunststoff bereitzustellen. In anderen Fällen sind in den Randprofilen Puffervolumen geschaffen worden, um darin überschüssigen Kunststoff aufzunehmen. Die bekannten Maßnahmen führen aber nicht oder nur bedingt zu zufriedenstellenden Ergebnissen. So werden teilweise Bereiche der Paneele versehentlich nicht ausgeschäumt oder es kommt zu einem versehentlichen Austreten von Kunststoff aus dem Paneel, was das Verbinden des Paneels mit weiteren Paneelen oder Anbauteilen beeinträchtigen kann. Ein Paneel mit Decklagen, einer geschäumten Kernlage und einem Randprofil mit einer Entlüftung nach den Merkmalen der Präambel von Anspruch 1 ist in der EP 2 116 449 beschrieben, von der die Erfindung ausgeht.

Daher liegt der vorliegenden Erfindung die Aufgabe zugrunde, das Paneel und den Aufbau jeweils der eingangs genannten und zuvor näher erläuterten Art derart auszugestalten und weiterzubilden, dass ein zufriedenstellendes Ausschäumen des Paneels in einfacher Weise sichergestellt werden kann.
Die Aufgabe ist bei einem Paneel nach dem Oberbegriff des Anspruchs 1 dadurch gelöst, dass die wenigstens eine Entlüftungseinrichtung wenigstens einen zum Innenraum des Paneels geöffneten und sich wenigstens teilweise durch die Entlüftungseinrichtung erstreckenden Strömungskanal aufweist und dass die Entlüftungseinrichtung wenigstens eine luftdurchlässige, den wenigstens einen Strömungskanal wenigstens teilweise verschließende Membran aufweist.

Die der Erfindung zugrunde liegende Aufgabe ist ferner bei einem Aufbau nach dem Oberbegriff des Anspruchs 14 dadurch gelöst, dass das Paneel nach einem der Ansprüche 1 bis 13 ausgebildet und mit einer Nut/Feder-Verbindung, insbesondere über eine formschlüssige Verbindung, eine Rastverbindung und/oder eine stoffschlüssige Verbindung, mit dem weiteren Paneel und/oder dem Anbauteil verbunden ist.

Die Entlüftungseinrichtung stellt einerseits einen Strömungskanal für das Durchströmen und damit Entweichen von Luft aus dem Innenraum des Paneels bereit. Andererseits verhindert die Entlüftungseinrichtung, dass neben der Luft auch noch, insbesondere wenigstens teilweise geschäumter, Kunstsoff durch den Strömungskanal nach außen gelangen kann. Daher erklärt sich auch der vorliegend verwendete Begriff einer Membran. Bei der vorliegenden Membran handelt es sich nämlich um eine relativ dünne Schicht eines Materials, das den Stofftransport durch diese Schicht beeinflusst, und zwar insbesondere derart, dass die Membran für einen Stoff durchlässig und einen anderen Stoff wenigstens im Wesentlichen undurchlässig ist. Die vorliegende Membran kann also bedarfsweise als semipermeable Membran angesehen werden. Die vorliegend verwendete Membran ist dabei insbesondere für die Luft durchlässig, die durch den schäumenden Kunststoff aus dem Innenraum des Paneels verdrängt wird. Für den Kunststoff, der insbesondere wenigstens teilweise geschäumt ist, ist die Membran jedoch wenigstens im Wesentlichen undurchlässig. Dies hängt insbesondere an Oberflächeneigenschaften des Kunststoffs, die sich fundamental von denen der Luft unterscheiden. Als Beispiel können die Benetzung der Membran durch den Kunststoff, die sehr viel höhere Viskosität des Kunststoffs, die Kapillarität des Kunststoffs und/oder die Molekülgröße angeführt werden. Die grundsätzlichen Prinzipien sind dem Fachmann durchaus geläufig, so dass eine eingehendere Erläuterung dieser Prinzipien vorliegend entbehrlich ist.

Die Membran wird wegen ihrer besonderen Eigenschaften und Ausgestaltung in bevorzugter Weise einen separaten Bestandteil der Entlüftungseinrichtung darstellen. In diesem Fall kann sich die Entlüftungseinrichtung beispielweise aus einem Grundkörper und einer Membran zusammensetzen. Da dies jedoch nicht grundsätzlich zwingend der Fall sein muss, wird vorliegend der Einfachheit und besseren Verständlichkeit halber, wobei unnötige Wiederholungen vermieden werden, teilweise lediglich von der Entlüftungseinrichtung gesprochen, auch wenn bedarfsweise lediglich der Grundkörper der Entlüftungseinrichtung gemeint sein kann. Der Fachmann wird jedoch anhand des Kontextes stets die Bedeutung des Begriffs Entlüftungseinrichtung erkennen.

Die Membran ist dabei vorzugsweise so beschaffen, dass die Membran den Kunststoff auch dann zurückhält, wenn dieser beim Ausschäumen des Paneels mit vergleichsweise hohem Druck, beispielsweise von etwa 2 bar, gegen die Membran gepresst wird. Dies wird beispielsweise und insbesondere dadurch erreicht, dass die Öffnungen in der Membran möglichst klein gewählt werden. Um gleichzeitig einen großen freien Strömungsquerschnitt für die Luft bereitstellen zu können, lassen sich dafür bedarfsweise sehr viele Öffnungen in der Membran vorsehen. Dies ist bei der Membran sehr viel einfacher als bei der Entlüftungseinrichtung. In die Entlüftungseinrichtung können nämlich nur sehr bedingt sehr viele sehr kleine Strömungskanäle eingebracht werden, jedenfalls nicht unbedingt zu vertretbaren Kosten. Dieses Problem wird daher durch die Verwendung einer Membran in der beschriebenen Weise umgangen. Es kann sehr einfach wenigstens ein Strömungskanal mit einem größeren Strömungsquerschnitt in die Entlüftungseinrichtung oder bedarfsweise den Grundkörper der Entlüftungseinrichtung eingebracht werden, was geringere Fertigungskosten in Bezug auf die Entlüftungseinrichtung ermöglicht. Über die Membran, die für sich genommen wiederum einfach gefertigt und an der Entlüftungseinrichtung oder dem Grundkörper der Entlüftungseinrichtung vorgesehen werden kann, lässt sich dann verhindern, dass versehentlich der Kunststoff beim Ausschäumen des Paneels aus dem Paneel oder der Entlüftungseinrichtung ausritt. Gleichwohl erfordert dies die zusätzliche Verwendung der Membran, die zudem separat festgelegt werden muss. Der mit der Verwendung einer zusätzlichen Membran und der Montage der Membran an der Entlüftungseinrichtung einhergehende Aufwand ist jedoch vor dem Hintergrund des vorbeschriebenen Vorteils gerechtfertigt.

Die Membran kann grundsätzlich an einer beliebigen Stelle im Strömungskanal der Entlüftungseinrichtung bzw. des Grundkörpers der Entlüftungseinrichtung angeordnet sein. Dabei bieten sich insbesondere Orte an, an denen die Membran einfach montiert und sicher festgelegt werden kann. Dabei kommt insbesondere die Anbringung der Membran unmittelbar vor und/oder unmittelbar nach dem Strömungskanal gesehen in Strömungsrichtung der aus dem Innenraum des Paneels verdrängten Luft in Frage.

Da es in vielen Fällen ausreichen wird, wenn die Entlüftung an bestimmten Stellen des Paneels erfolgt, bietet es sich besonders an, wenn die Entlüftungseinrichtung als separates Bauteil ausgebildet ist, die dann an geeigneter Stelle am Randprofil vorgesehen bzw. mit dem Randprofil verbunden sein kann. Es kann aber auch vorgesehen sein, die Entlüftungseinrichtung wenigstens im Wesentlichen entlang des gesamten Randprofils vorzusehen. Das kann erreicht werden, indem eine separate Entlüftungseinrichtung mit einer entsprechenden Erstreckung an dem Randprofil festgelegt wird. Es können aber auch mehrere Entlüftungseinrichtungen nebeneinander und bedarfsweise zusätzlich untereinander beabstandet entlang des Randprofils vorgesehen werden. Unabhängig von der Art der Entlüftungseinrichtung und des Orts der Entlüftungseinrichtung bezogen auf das Randprofil, kann die Entlüftungseinrichtung auch in das Randprofil integriert werden. Dies kann insbesondere derart erfolgen, dass das Randprofil und die Entlüftungseinrichtung einstückig ausgebildet sind. Es kann also bedarfsweise auf die Verwendung einer separaten Entlüftungseinrichtung verzichtet werden. Alternativ oder zusätzlich bietet es sich jedoch grundsätzlich an, wenn die Membran aus einem anderen Material als der Rest der Entlüftungseinrichtung besteht, so dass bedarfsweise jedenfalls die Membran als separates Bauteil ausgebildet sein kann. Beispielsweise das Randprofil und die Entlüftungseinrichtung im Übrigen können aus einem, gegebenenfalls thermoplastischen, Kunststoff gefertigt sein und somit bedarfsweise gemeinsam extrudiert oder spritzgegossen sein. Folglich ist eine Verbindung zwischen dem Randprofil und der Entlüftungseinrichtung recht breit zu verstehen, etwa auch die Verbindung bei einer einstückigen Ausgestaltung. Der einfacheren Verständlichkeit halber und da eine separate Entlüftungseinrichtung vielfach bevorzugt sein wird, wird vorliegend weiter an dem Begriff der Verbindung zwischen dem Randprofil und der Entlüftungseinrichtung festgehalten.

Bei einer ersten besonders bevorzugten Ausgestaltung des Paneels ist die Membran aus einem Fasermaterial gebildet. Das Fasermaterial ermöglicht auf einfache und zugleich zuverlässige Weise das Zurückhalten des Kunststoffs, während die Luft durch das Fasermaterial entweichen kann. Damit das Fasermaterial einfach hergestellt und sichergestellt werden kann, dass der Kunststoff zuverlässig zurückgehalten wird, bietet es sich an, wenn das Fasermaterial aus wenigstens einem Kunststoff gefertigt wird. Bevorzugte Eigenschaften hinsichtlich einer guten Durchlässigkeit der Luft und eines guten Zurückhaltens des Kunststoffs haben sich bei einem Fasermaterial in Form eines Geleges, eines Gewebes, eines Gewirks, eines Vlies und/oder eines Filzes ergeben.

Die Anbringung der Membran ist an dem der Kernlage zugewandten Ende des wenigstens einen Strömungskanals besonders einfach. Hier kann bedarfsweise eine entsprechend große ebene Verbindungsfläche vorgesehen sein. Außerdem kann so sichergestellt werden, dass geringe Mengen Kunststoff, der die Membran gegebenenfalls durchdringen könnte, spätestens im Strömungskanal aushärtet und so nicht aus dem Paneel heraustreten kann. Besonders einfach ist es dabei, wenn die Membran mit einer der Kernlage zugewandten Seite der Entlüftungseinrichtung, insbesondere des Grundkörpers, verklebt ist. Dann kann die Membran einfach auf dem Grundkörper der Entlüftungseinrichtung aufgebracht werden.

Der wenigstens eine Strömungskanal kann bevorzugt in einem Grundkörper der Entlüftungseinrichtung vorgesehen sein. So lässt sich der Grundkörper leicht und kostengünstig fertigen. Die Membran kann dann ebenfalls leicht und kostengünstig am Grundkörper angebracht, insbesondere mit dem Grundkörper verklebt, werden. Um die Herstellungskosten zu senken, bietet sich weiter die Herstellung des Grundkörpers wenigstens im Wesentlichen aus wenigstens einem Kunststoff an. Bei Verwendung wenigstens eines thermoplastischen Kunststoffs bietet sich zudem das Spritzgießen des Grundkörpers an, da so recht einfach der wenigstens eine Strömungskanal in den Grundkörper der Entlüftungseinrichtung eingebracht werden kann.

Im Falle einer separaten Entlüftungseinrichtung lässt sich diese sehr einfach und zuverlässig in einer Nut des Randprofils festlegen. Die Verbindung zwischen dem Randprofil und der Entlüftungseinrichtung kann dann besonders zweckmäßig formschlüssig erfolgen. Insbesondere kommt in diesem Zusammenhang eine Rastverbindung in Frage, die sich sehr einfach fügen lässt. Eine stoffschlüssige Verbindung, insbesondere eine Klebeverbindung, ist alternativ oder zusätzlich auch denkbar. Die Verbindung kann sich dann kaum noch versehentlich lösen. Ferner kann die Luft einfach aus dem Innenraum des Paneels abgeleitet werden, wenn der wenigstens eine Strömungskanal der Entlüftungseinrichtung in fluider Kommunikation mit der Nut steht. Dann kann die Luft über den wenigstens einen Strömungskanal wenigstens indirekt in die Nut abgeleitet werden, von wo die Luft dann über das Randprofil weiter aus dem Paneel abgeleitet werden kann. Mit anderen Worten ist der wenigstens eine Strömungskanal über eine luftdurchlässige Verbindung mit der Nut des Randprofils verbunden, so dass die Luft aus dem Strömungskanal in die Nut abgegeben werden kann. Damit die in die Nut geleitete Luft gezielt abgeführt werden kann und ein Verstopfen der Nut durch eindringenden Kunststoff verhindert wird, kann die Entlüftungseinrichtung alternativ oder zusätzlich die Nut des Randprofils nach außen abschließen, insbesondere abdichten, wozu dann bedarfsweise ein Dichtmittel vorgesehen sein kann. Dabei können Dichtmittel bevorzugt sein, die sowohl mit der Entlüftungseinrichtung, insbesondere dem Verbindungsabschnitt, als auch mit dem Randprofil, insbesondere der Nut, stoffschlüssig verbunden, insbesondere verklebt sind. Die Luft kann dann vorzugsweise in etwa senkrecht zur Nut des Randprofils in die Entlüftungseinrichtung, in den Strömungskanal und/oder durch die Entlüftungseinrichtung strömen.

Um eine sichere und zuverlässige Verbindung zwischen der Entlüftungseinrichtung und dem Randprofil schaffen zu können, bietet es sich an, wenn die Nut des Randprofils nach innen gerichtete Rastvorsprünge und die Entlüftungseinrichtung nach außen gerichtete Rastvorsprünge aufweisen, die miteinander korrespondieren. Dann können sich die Rastvorsprünge beim Verbinden von Entlüftungseinrichtung und Randprofil formschlüssig hintergreifen, vorzugsweise miteinander verrasten. Ein versehentliches Trennen der Verbindung kann so vermieden werden.

Für die zweckmäßige Ableitung der Luft aus dem Paneel kann das Randprofil einen sich in Längsrichtung des Randprofils erstreckenden sowie in fluider Kommunikation mit dem wenigstens einen Strömungskanal der Entlüftungseinrichtung stehenden Entlüftungskanal aufweisen. Die Luft kann dann aus dem Inneren des Paneels über die Entlüftungseinrichtung an das Randprofil übergeben werden, das die Luft dann ableitet. Die Entlüftungseinrichtung stellt dann eine Art Anschluss des Randprofils an das Innere des Paneels und die daraus zu verdrängende Luft dar. Um die fluide Kommunikation zwischen der Entlüftungseinrichtung und dem Entlüftungskanal des Randprofils bereitzustellen, kann der Entlüftungskanal über eine Öffnung mit der Nut des Randprofils in fluider Kommunikation stehen. Dann kann die Entlüftungseinrichtung die abzuführende Luft aus dem Innenraum des Paneels in die Nut des Randprofils leiten, von wo die Luft über die wenigstens eine Öffnung in den Entlüftungskanal des Randprofils und von dort aus dem Paneel gelangt.

Die Entlüftung des Paneels über Randprofile kann auf einfache und zuverlässige Weise erfolgen, wenn wenigstens zwei benachbarte Randprofile des Paneels unter Bildung eines Entlüftungsspalts zwischen den Randprofilen aneinander angrenzen. Dann kann die verdrängte Luft beispielsweise entlang wenigstens eines Randprofils zur Seite geleitet werden, wo die Luft dann über den Entlüftungsspalt an die Umgebung des Paneels abgegeben werden kann. Dies ist insbesondere dann von Vorteil, wenn der Entlüftungsspalt des entsprechenden Randprofils in fluider Kommunikation mit dem Strömungskanal der Entlüftungseinrichtung steht. So wird eine zielgerichtete Entlüftung des Paneels erreicht. Sehr zweckmäßig und zuverlässig ist es, die Luft über den Entlüftungskanal und den Entlüftungsspalt abzugeben. Dazu steht dann der Entlüftungskanal wenigstens eines Randprofils in fluider Kommunikation mit einem Entlüftungsspalt zwischen zwei aneinander angrenzenden Randprofilen.

Damit die Luft zielgerichtet aus dem Inneren des Paneels an die Umgebung des Paneels abgeleitet werden kann, kann die Verbindung zwischen dem Randprofil und der Entlüftungseinrichtung durch ein Dichtmittel abgedichtet sein. Durch diesen abgedichteten Bereich kann dann keine oder nur wenig Luft strömen. Die Luft wird vielmehr auf den dafür vorgesehenen Wegen über die Entlüftungseinrichtung und das Randprofil abgeleitet. Besonders bevorzugt ist es dabei, wenn die Abdichtung zwischen der Nut des Randprofils und dem in die Nut eingreifenden Verbindungsabschnitt der Entlüftungseinrichtung erfolgt. Dies kann dann gleichzeitig dem zuverlässigen Verbinden von Entlüftungseinrichtung und Randprofil dienen, was insbesondere der Fall ist, wenn ein separates Dichtmittel verwendet wird, das bedarfsweise eine stoffschlüssige Verbindung mit der Entlüftungseinrichtung einerseits und mit dem Randprofil andererseits eingeht.

Zum Entlüften des Paneels hat es sich als zweckmäßig erwiesen, wenn an wenigstens einer Schmalseite des Paneels wenigstens zwei Randprofile angrenzend zueinander vorgesehen sind und über wenigstens eine Entlüftungseinrichtung miteinander verbunden sind. Dann kann der Verbindungsbereich der Randprofile als Entlüftungsspalt genutzt werden. Alternativ oder zusätzlich kann aber auch die Entlüftungseinrichtung als Verbinder für die beiden aneinander angrenzenden Randprofile genutzt werden. Unabhängig davon können auch an wenigstens zwei aneinander angrenzenden Schmalseiten des Paneels wenigstens zwei über Eck aneinander angrenzende Randprofile vorgesehen sein. Die Randprofile können dann im Eckbereich zwischeneinander einen Entlüftungsspalt bilden. Alternativ oder zusätzlich können die Randprofile über wenigstens eine Entlüftungseinrichtung miteinander verbunden sein, um die Randprofile zu verbinden und/oder die verdrängte Luft über den Eckbereich abzuleiten.

Die einzelnen Paneele müssen zur Bildung eines Kofferaufbaus grundsätzlich mit anderen Paneelen und/oder Anbauteilen verbunden werden, wobei es sich bei den Anbauteilen um Teile eines Rückwandrahmens, Teile des Bodens oder aber mit einem weiteren Paneel verbundene Anschlussteile handeln kann. Die Anbauteile können beispielsweise den Kantenbereich zwischen den Paneelen bilden, so dass zwei Paneele bedarfsweise über ein Anbauteil über Eck miteinander verbunden werden können.

Damit das Paneel einfach mit weiteren Paneelen und/oder Anbauteilen zur Bildung eines Aufbaus verbunden werden kann, ist es zweckmäßig, wenn das Randprofil auf der der Kernlage abgewandten Seite ein Verbindungsprofil zum Verbinden des Paneels mit einem anderen Paneel und/oder mit einem Anbauteil aufweist. Das Randprofil kann dann weitere Funktionalitäten übernehmen, ohne dass dafür weitere Bauteile erforderlich wären. Dabei bietet es sich weiter an, wenn das Verbindungsprofil zur Bildung einer formschlüssigen Verbindung, einer Rastverbindung und/oder einer stoffschlüssigen Verbindung mit einem weiteren Paneel und/oder einem Anbauteil ausgebildet ist. So lässt sich einfach und zuverlässig ein Aufbau aufbauen.

Dabei kann eine besonders einfache und langlebige Verbindung erhalten werden, wenn das Verbindungsprofil des Randprofils wenigstens eine Feder und wenigstens eine Nut, insbesondere zwei Nuten, zur Bildung einer Nut/Feder-Verbindung mit dem anderen Paneel und/oder mit dem Anbauteil aufweist. Die Verbindung kann dabei weiter verstärkt werden, wenn die wenigstens eine Feder nach außen weisende Rastvorsprünge aufweist. Diese können dann zur Bildung einer Rastverbindung mit dem weiteren Paneel und/oder Anbauteil des Aufbaus genutzt werden.

Das Fügen einer Verbindung zwischen dem Paneel und einem weiteren Paneel und/oder einem Anbauteil kann vereinfacht werden, wenn wenigstens eine Feder des Verbindungsprofils zwei gegeneinander sowie senkrecht zum Paneel verstellbare Federabschnitte aufweist. Dann kann die Feder bedarfsweise in eine recht enge korrespondierende Nut eingeführt werden, in der die Feder dann fest gehalten wird. Dies gilt insbesondere für den Fall, dass die Federabschnitte und/oder die korrespondierende Nut Rastvorsprünge aufweist. So kann einfach eine feste Rastverbindung gefügt werden. Um einen zweckmäßigen Abschluss des Paneels im verbundenen Zustand zu erreichen, können alternativ oder zusätzlich die Decklagen stoffschlüssig mit an die Decklagen angrenzenden Federn verbunden sein, die dann mitsamt den Rändern der Decklagen in korrespondierenden Nuten eines weiteren Paneels und/oder eines Anbauteils aufgenommen werden können.

Hinsichtlich des Aufbaus ist es grundsätzlich bevorzugt, wenn das Anbauteil und/oder das weitere Paneel wenigstens eine Feder und wenigstens eine Nut zur Bildung einer Nut/Feder-Verbindung aufweisen. Dann kann der Aufbau einfach und schnell hergestellt werden, insbesondere durch Ineinanderstecken korrespondierender Verbindungsprofile. Die Verbindung zwischen dem Paneel und dem weiteren Paneel und/oder dem Anbauteil kann dabei als formschlüssige Verbindung, Rastverbindung und/oder als stoffschlüssige Verbindung ausgebildet sein.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem erfindungsgemäßen Aufbau umfassend erfindungsgemäße Paneele in einer perspektivischen Ansicht,
- Fig. 2: eine Detailansicht eines erfindungsgemäßen Paneels aus Fig. 1 in einer Schnittansicht,
- Fig. 3: ein Detail des Paneels aus Fig. 1 in einer perspektivischen Ansicht,
- Fig. 4A-B: die Entlüftungseinrichtung von Fig. 3 in einer perspektivischen Ansicht von vorne und von hinten,
- Fig. 5: das Detail von Fig. 3 in einer Schnittansicht,
- Fig. 6: ein Detail eines zweiten Paneels in einer perspektivischen Ansicht und
- Fig. 7: ein Detail eines dritten Paneels in einer perspektivischen Ansicht.

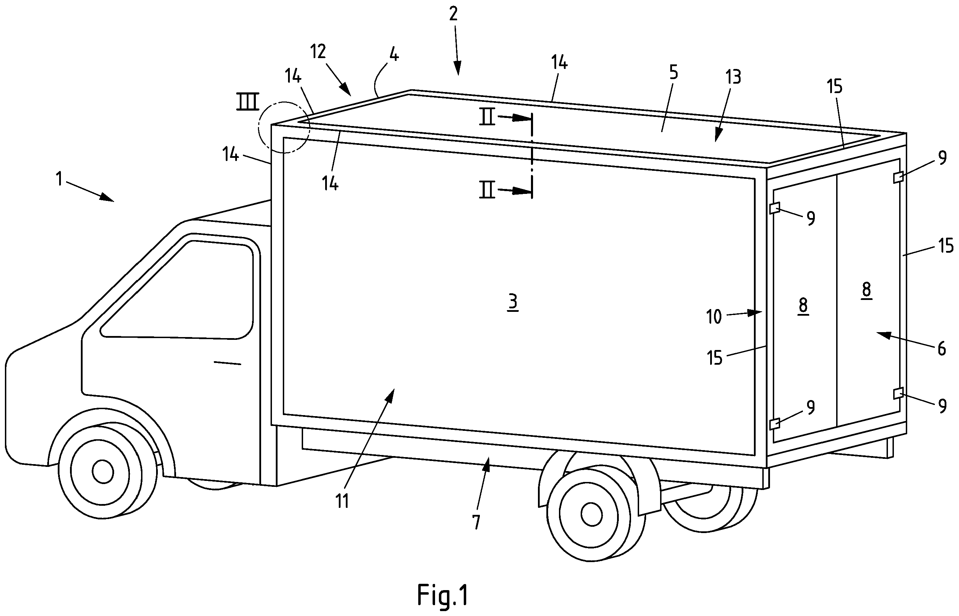

In der Fig. 1 ist ein Nutzfahrzeug 1 in Form eines motorgetriebenen Lastkraftwagens mit einem zulässigen Gesamtgewicht zwischen 3 und 6 Tonnen dargestellt, das einen Aufbau 2 in Form eines Kofferaufbaus aufweist. Der Aufbau 2 weist Seitenwände 3, eine Stirnwand 4, ein Dach 5, eine Rückwand 6 und einen Boden 7 auf. Die Rückwand 6 umfasst dabei zwei Flügeltüren 8, die über Scharniere 9 an einem Rückwandrahmen 10 gehalten sind. Die Seitenwände 3 werden durch Seitenwandpaneele 11 gebildet, die ähnlich aufgebaut sind wie das Stirnwandpaneel 12 zur Bildung der Stirnwand 4 und das Dachpaneel 13 zur Bildung des Dachs 5.

Die einzelnen Paneele 11,12,13 sind über Anbauteile 14 miteinander verbunden, welche Kanten des Aufbaus 2 bilden. Weitere Anbauteile 15, die am hinteren Ende des Aufbaus 2 vorgesehen sind, bilden den Rückwandrahmen 10, an dem die Türen 8 festgelegt sind. Ferner besteht eine Verbindung jeweils zwischen den Seitenwandpaneelen 11 und dem Stirnwandpaneel 12 mit dem Boden 7 des Aufbaus 2.

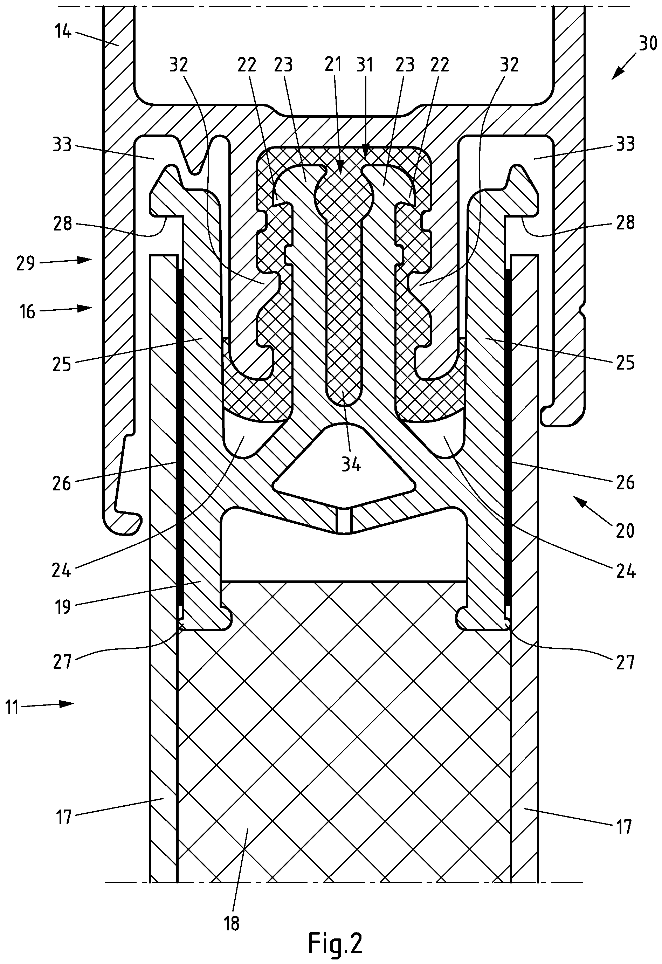

In der Fig. 2 ist ein Detail des Aufbaus 2 im Bereich der Verbindung einer Schmalseite 16 des Seitenwandpaneels 11 mit einem Anbauteil 14, das den Kantenbereich für den Anschluss an das Dachpaneel 13 bildet, dargestellt. Das Seitenwandpaneel 11 weist zwei strukturgebende Decklagen 17 auf, die jeweils mehrschichtig aufgebaut sein können, aber jedenfalls eine Strukturlage aus einem Metall oder einem gegebenenfalls faserverstärkten Kunststoff aufweisen. Der Einfachheit halber sind die Decklagen 17 lediglich einschichtig dargestellt, die Decklagen 17 könnten aber bedarfsweise auch aus mehreren Lagen zusammengesetzt sein. Zwischen den Decklagen 17 befindet sich eine Kernlage 18 aus einem geschäumten Kunststoff, insbesondere aus Polyurethan (PU). An der Schmalseite 16 des Seitenwandpaneels 11 ist ein Randprofil 19 vorgesehen, das das Seitenwandpaneel 11 nach außen abschließt und die Kernlage 18 vor dem Eindringen von Feuchtigkeit schützt. Bei dem dargestellten und insoweit bevorzugten Seitenwandpaneel 11 sind an allen Schmalseiten 16 Randprofile 19 vorgesehen. Die Kernlage 18 wird durch Ausschäumen des Seitenwandpaneels 11 erhalten. Dazu wird der auszuschäumende Kunststoff in den Innenraum des Seitenwandpaneels 11 eingebracht, der durch die Randprofile 19 und die an den Randprofilen 19 anliegenden Decklagen 17 gebildet wird. Beim Ausschäumen des Innenraums des Seitenwandpaneels dehnt sich der Kunststoff aus und verteilt sich immer weiter im Innenraum, wobei der geschäumte Kunststoff Stück für Stück die Luft im Innenraum verdrängt. Um ein wenigstens im Wesentlichen vollständiges Ausschäumen des Seitenwandpaneels 11 zu ermöglichen, wird die verdrängte Luft aus dem Seitenwandpaneel 11 nach außen abgeleitet, und zwar über wenigstens ein Randprofil 19, da die Decklagen 17 im Wesentlichen luftundurchlässig sind.

Um das Seitenwandpaneel 11 einfach und zuverlässig mit weiteren Paneelen 12,13 und/oder mit Anbauteilen 14,15 verbinden zu können, weist das Randprofil 19 auf der der Kernlage 18 abgewandten Seite ein Verbindungsprofil 20 auf. Das dargestellte und insoweit bevorzugte Verbindungsprofil 20 weist eine zentrale Feder 21 auf, die nach außen gerichtete Rastvorsprünge 22 aufweist und bei der dargestellten und insoweit bevorzugten Ausgestaltung in spreizbarer Weise in zwei Federabschnitte 23 zweigeteilt ist, die gegeneinander in einer Richtung senkrecht zum Seitenwandpaneel 11 gegeneinander verstellt werden können. Zu beiden Seiten der zentralen Feder 21 ist jeweils eine Nut 24 vorgesehen, deren innere Nutflanke durch die zentrale Feder 21 bzw. einen Federabschnitt 23 gebildet wird. Die jeweils äußere Nutflanke wird wiederum jeweils durch eine äußere Feder 25 gebildet, die teilweise mit der Decklage 17 überlappt und wenigstens teilweise mit der äußeren Feder 25 verbunden ist, und zwar über einen Klebespalt 26, der für eine stoffschlüssige Verbindung zwischen den Decklagen 17 und dem Randprofil 19 sorgt. Zur Bildung des Klebespalts 16 weist das Randprofil 19 zwei nach außen vorstehende Wülste 27 auf, die von innen an jeweils einer Decklage 17 anliegen. Die äußeren Federn 25 weisen zudem in Richtung der Decklagen 17 gerichtete Anschläge 28 auf, die mit der Decklage 17 in Anschlag kommen können, um zu vermeiden, dass das Randprofil 19 zu weit zwischen die Decklagen 17 gelangt.

Die Verbindung zwischen dem Seitenwandpaneel 11 und dem Anbauteil 14 im Eckbereich des Dachs 5 ist als Nut/Feder-Verbindung ausgebildet. Bei der Nut/Feder-Verbindung 29, die aus zwei korrespondierenden, ineinander geschobenen Verbindungsprofilen 20,30 des Seitenwandpaneels 11 und des Anbauteils 14 gebildet wird, greift die zentrale Feder 21 in eine korrespondierende zentrale Nut 31, die an ihren Nutflanken nach innen gerichtete Rastvorsprünge 32 aufweist, die bedarfsweise mit den Rastvorsprüngen 22 der zentralen Feder 21 zusammenwirken, um eine Rastverbindung bereitzustellen. Die Nutflanken der zentralen Nut 31 greifen ferner federähnlich in die Nuten 24 des korrespondierenden Verbindungsprofils 20 des Seitenwandpaneels 11 ein. Gleichfalls bilden die Nutflanken der zentralen Nut 31 die inneren Nutflanken äußerer Nuten 33 des Verbindungsprofils 30 des Anbauteils 14, in die die äußeren Federn 25 des Verbindungsprofils 20 des Seitenwandpaneels 11 eingreifen und die die Decklagen 17 des Seitenwandpaneels 11 auf ihren Außenseiten randseitig umgreifen. Die dargestellte und insoweit bevorzugte Nut/Feder-Verbindung 29 der Verbindungsprofile 20,30 zwischen dem Randprofil 19 einerseits und dem Anbauteil 14 andererseits ist auch stoffschlüssig gefügt, durch einen Klebstoff 34, der wenigstens teilweise zwischen den Verbindungsprofilen 20,30 vorgesehen ist.

Andere Paneele 11,12,13 des Aufbaus 2 können grundsätzlich ähnlich oder gleichartig zu dem zuvor beschriebenen Seitenwandpaneel 11 aufgebaut sein. Daher wird im Folgenden der Einfachheit und der besseren Verständlichkeit halber allgemein von einem Paneel 11 gesprochen, auch wenn damit insbesondere das Seitenwandpaneel 11 gemeint ist.

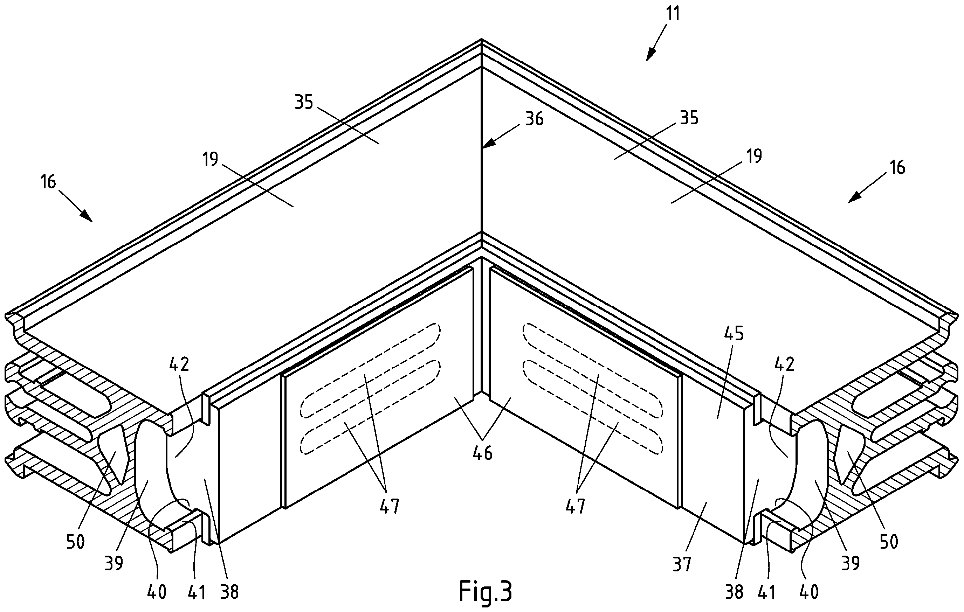

In der Fig. 3 ist ein Eckbereich des Paneels 11 aus der Fig. 2 dargestellt, wobei die Kernlage 18 und die Decklagen 17 weggelassen worden sind. In der Fig. 3 sind zwei im Eckbereich des Paneels 11 in etwa rechtwinklig aufeinander stoßende Randprofile 19 von zwei angrenzenden Schmalseiten 16 des Paneels 11 dargestellt. Die beiden Randprofile 19 grenzen mit ihren seitlichen Enden 35 aneinander und bilden dabei zwischeneinander einen Entlüftungsspalt 36 aus, durch den Luft aus dem Innenraum des Paneels 11 nach außen entweichen kann.

Beim dargestellten und insoweit bevorzugten Eckbereich des Paneels 11 bilden die Randprofile 19 eine Gehrung. Dies ist aber nicht erforderlich. Alternativ könnten die Enden der Randprofile 19 auch senkrecht zur deren jeweiligen Längserstreckung verlaufen. Dann könnte ein Randprofil 19 bis an die Nut 39 des anderen Randprofils 19 heranreichen, das sich bedarfsweise etwa soweit nach außen erstrecken kann, wie das benachbarte Randprofil 19, vorzugsweise jedoch ohne gegenüber diesem Randprofil 19 nach außen überzustehen. Dann würde der Entlüftungsspalt 36 parallel zu einem der beiden Randprofile 19 verlaufen.

Im Eckbereich des Paneels 11 sind die aneinander angrenzenden Randprofile 19 ferner über eine Entlüftungseinrichtung 37 miteinander verbunden. Dazu greift die Entlüftungseinrichtung 37 mit einem Verbindungsbereich 38, der von der Kernlage 18 weg weist und nach Art einer Feder ausgebildet ist, in Nuten 39 der Randprofile 19, die in Richtung der Kernlage 18 geöffnet sind. Die Verbindung zwischen der Entlüftungseinrichtung 37 und den Randprofilen 19 ist als Nut/Feder-Verbindung ausgebildet. Der Verbindungsbereich 38 der Entlüftungseinrichtung 37 und die Nuten 39 der Randprofile 19 weisen korrespondierende Rastvorsprünge 40,41 in Form von Rippen auf, die einander im verbundenen Zustand hintergreifen.

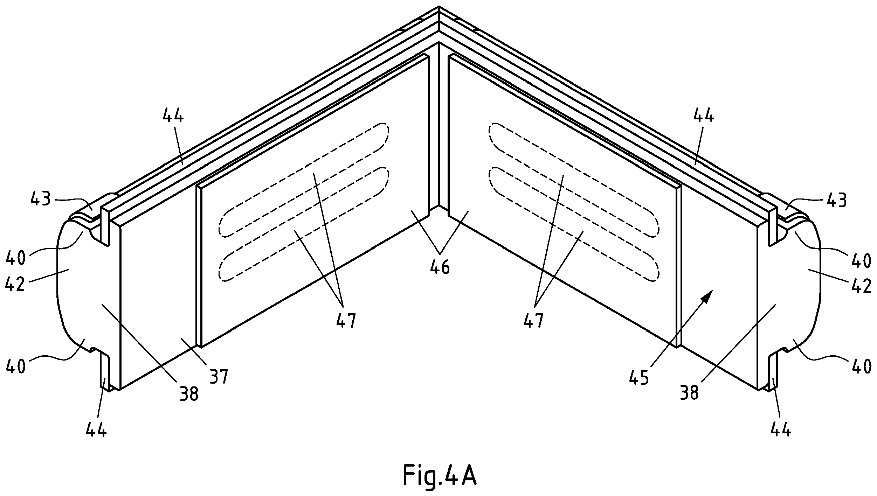

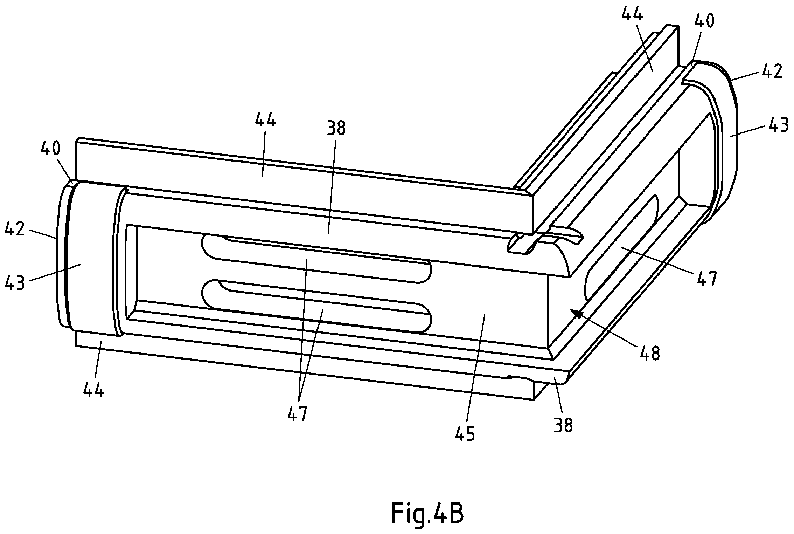

An den Längsenden der Entlüftungseinrichtung 37 verschließen Abschlussabschnitte 42 des Verbindungsabschnitts 38 die Nuten 39 der entsprechenden Randprofile 19 zur Seite hin. Zudem ist bei der dargestellten und insoweit bevorzugten Entlüftungseinrichtung 37 zwischen den Nuten 39 und dem Verbindungsabschnitt 42 an den Längsenden der Entlüftungseinrichtung 37 ein Dichtmittel 43 vorgesehen, wie dies insbesondere in den Fig. 4A-B dargestellt ist. Das Dichtmittel 43 kann bedarfsweise stoffschlüssig mit der Nut 39 einerseits und der Entlüftungseinrichtung 37 andererseits verbunden, insbesondere verklebt, sein. In der Längsrichtung der Nuten 39 tritt also weder eine nennenswerte Menge an Luft aus der Entlüftungseinrichtung 37 aus noch eine nennenswerte Menge an Kunststoff in die Entlüftungseinrichtung 37 ein. Durch die winklige Ausgestaltung der Entlüftungseinrichtung 37 wird weiter verhindert, dass im Eckbereich des Paneels 11, wo die beiden Randprofile 19 aneinander angrenzen, Kunststoff in nennenswerten Mengen in die Nuten 39 der Randprofile 19 oder die Entlüftungseinrichtung 37 eindringen kann. Im Übrigen ist im Randbereich zwischen den Verbindungsabschnitt 38 der Entlüftungseinrichtung 37 und den Nuten 39 der Randprofile 19 ein Dichtmittel 44 vorgesehen, das bedarfsweise stoffschlüssig mit den Randprofilen 19 und der Entlüftungseinrichtung 37 verbunden, insbesondere verklebt, sein kann. Auch dieser Randbereich ist somit letztlich abgedichtet.

Die dargestellte und insoweit bevorzugte Entlüftungseinrichtung 37 weist neben den Dichtmitteln 43,44 noch einen Grundkörper 45 und zwei Membrane 46 auf. In dem Grundkörper 45 der Entlüftungseinrichtung 37 sind Strömungskanäle 47 eingelassen, die sich in etwa senkrecht zu den zugeordneten Randprofilen 19 durch den Grundkörper 45 erstrecken. Vor den Strömungskanälen 47 ist jedoch jeweils eine Membran 46 vorgesehen. Die Membranen 46 sind mit den zum Innenraum weisenden Seiten der Entlüftungseinrichtung 37 verklebt und somit vor dem jeweiligen Strömungskanal 47 vorgesehen.

Ferner sind die Membranen 46 aus Kunststofffasern gebildet, die so angeordnet sind, dass die aus dem Innenraum des Paneels 11 beim Ausschäumen des Paneels 11 verdrängte Luft problemlos durch die Membranen 46 in die Strömungskanäle 47 im Grundkörper 45 der Entlüftungseinrichtung 37 gelangen kann. Ausschäumender Kunststoff, der bis an die Membranen 46 gelangt, kann diese jedoch nicht durchdringen. Die weitere Ausbreitung des Kunststoffs in die Strömungskanäle 47 hinein wird folglich wenigstens im Wesentlichen unterbunden. Der Kunststoff füllt stattdessen bedarfsweise noch nicht ausgeschäumte Bereiche des Paneels 11. Jedenfalls wird der Kunststoff aber durch die wenigstens eine Membran 46 wenigstens im Wesentlichen zurückgehalten, so dass kein Kunststoff aus dem Paneel 11 austreten kann.

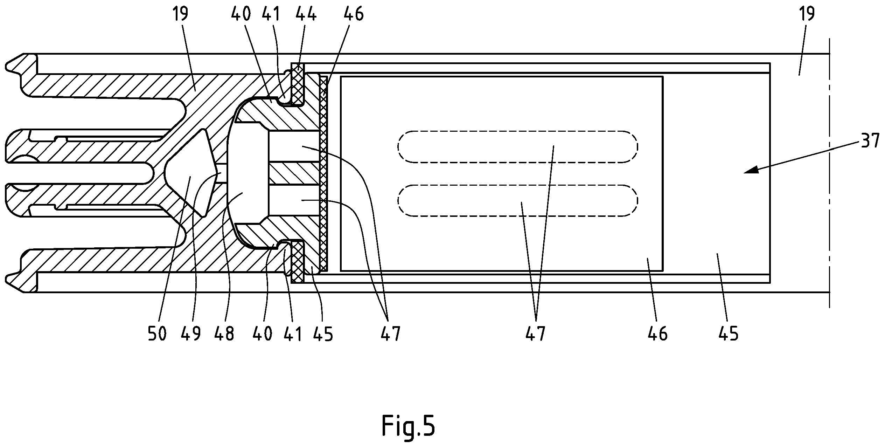

Bei der dargestellten und insoweit bevorzugten Entlüftungseinrichtung 37 erstrecken sich, wie dies insbesondere in der Fig. 5 dargestellt ist, die Strömungskanäle 47 in eine rinnenförmige Aussparung 48, anders ausgebildete Aussparungen wären aber ebenfalls denkbar. Aus diesen Aussparungen 48 bzw. aus dem Strömungskanal 47 strömt die aus dem Innenraum verdrängte Luft über wenigstens eine Öffnung 49 in einen Entlüftungskanal 50, der sich längs des jeweiligen Randprofils 19 erstreckt. Dies ist insbesondere der Darstellung der Fig. 3 zu entnehmen. Im Entlüftungskanal 50 kann die Luft dann bis zu dem Entlüftungsspalt 36 strömen, der zwischen den angrenzenden Randprofilen 19 vorgesehen ist. Über den Entlüftungsspalt 36 kann die verdrängte Luft dann aus dem Paneel 11 nach außen entweichen.

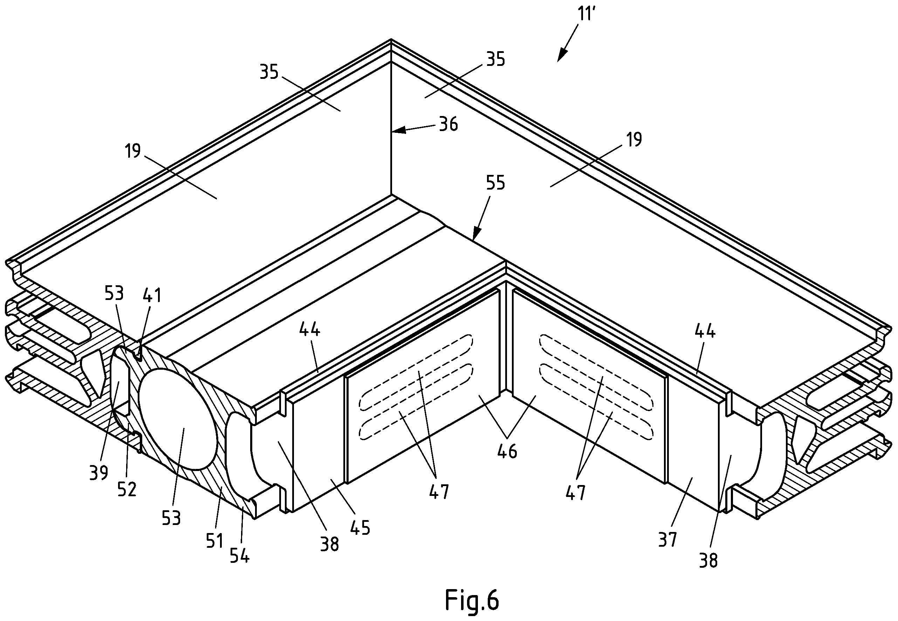

In der Fig. 6 ist ein Eckbereich eines anderen Paneels 11' dargestellt, wobei die Randprofile 19 grundsätzlich analog, insbesondere wenigstens gleichartig oder identisch zu den Randprofilen 19 der Fig. 3 ausgebildet sind. Auch ist die Entlüftungseinrichtung 37 wenigstens im Wesentlichen gleichartig mit der Entlüftungseinrichtung 37 aus Fig. 3 ausgebildet. Im Unterschied zur Fig. 3 ist noch ein Montageprofil 51 vorgesehen, das formschlüssig mit einem Randprofil 19 verbunden ist. Dazu weist das Montageprofil 51 einen Federabschnitt 52 auf, der in die Nut 39 eines Randprofils 19 eingesteckt und dort über Rastvorsprünge 41,53 mit der Nut 39 verrastet ist. Es bildet sich so eine Nut/Feder-Verbindung aus, mit der das Montageprofil 51 unverlierbar mit dem Randprofil 19 verbunden ist. Im Montageprofil 51 ist ein Montagekanal 53 vorgesehen, durch den eine, insbesondere elektrische, Leitung hindurchgeführt sein kann. Über die Leitung können elektrische Verbraucher, Pneumatikeinrichtungen und/oder Hydraulikeinrichtungen an ein Bordnetz angeschlossen sein. Das Montageprofil 51 weist auf der dem Federabschnitt 52 abgewandten Seite einen Nutabschnitt 54 auf, der wenigstens im Wesentlichen der Nut 39 des Randprofils 19 entspricht. Daher ist der Nutabschnitt 54 des Montageprofils 51 in der Lage, den Verbindungsabschnitt 38 der Entlüftungseinrichtung 37 formschlüssig aufzunehmen. Dabei verrasten der Verbindungsabschnitt 38 der Entlüftungseinrichtung 37 und der Nutabschnitt 54 des Montageprofils 51 miteinander und bilden eine Nut/Feder-Verbindung. Eine wenigstens im Wesentlichen gleichartige Nut/Feder-Verbindung ist an dem anderen Schenkel der Entlüftungseinrichtung 37 zwischen dem Verbindungsabschnitt 38 der Entlüftungseinrichtung 37 und dem angrenzenden Randprofil 19 vorgesehen. Diese Verbindung ist bereits grundsätzlich im Zusammenhang mit den Fig. 3-5 beschrieben worden.

Die aus dem Innenraum des Paneels 11' verdrängte Luft gelangt einerseits über Strömungskanäle 47 in die Nut 39 des rechts dargestellten Randprofils 19. Von dort gelangt die Luft weiter über wenigstens eine Öffnung 49 in einen Entlüftungskanal 50 und anschließend in den Entlüftungsspalt 36 zwischen den Randprofilen 19. Zudem kann die verdrängte Luft über die links dargestellten Strömungskanäle 47 der Entlüftungseinrichtung 37 in den Nutabschnitt 54 des Montageprofils 51 gelangen. Von dort kann die Luft dann bedarfsweise über den Spalt 55 zwischen dem Montageprofil 51 und dem rechtwinklig dazu angeordneten Randprofil 19 und anschließend ebenfalls durch den Entlüftungsspalt 36 zwischen den Randprofilen 19 entweichen.

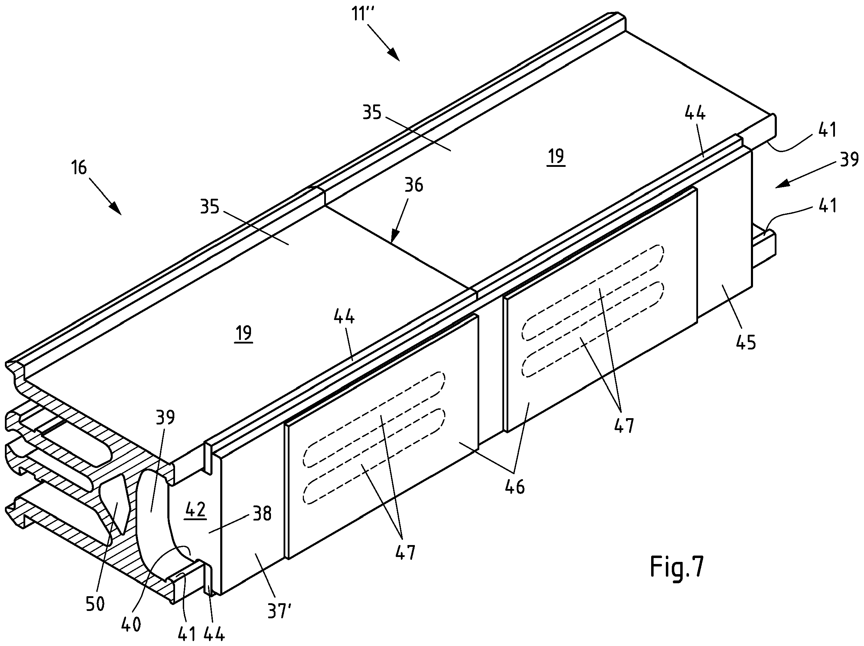

Bei einer alternativen Ausgestaltung eines Paneels 11" gemäß Fig. 7 sind an einer Schmalseite 16 wenigstens zwei Randprofile 19 vorgesehen, die zwischeneinander einen Entlüftungsspalt 36 bilden. Die beiden Randprofile 19 sind über eine Entlüftungseinrichtung 37' miteinander verbunden. Die Entlüftungseinrichtung 37' ist analog zu der Entlüftungseinrichtung 37 aus den Fig. 3-5 ausgebildet. Im Unterschied dazu ist die Entlüftungseinrichtung 37' der Fig. 7 allerdings nicht winklig sondern länglich ausgebildet. Die Entlüftungseinrichtung 37' ist ebenfalls mit Membranen 46 versehen, die an einer Außenseite der Entlüftungseinrichtung 37' vorgesehen sind, die in Richtung der Kernlage 18 weisen. Damit verschließen die Membranen 46 die in einem Grundkörper 45 der Entlüftungseinrichtung 37 vorgesehenen Strömungskanäle 47, in die die aus dem Innenraum des Paneels 11 verdrängte Luft anders als der Kunststoff einströmen kann. Die Entlüftungseinrichtung 37' ist ferner, wie bereits beschrieben, mit einem Verbindungsabschnitt 38 in einer Nut 39 des Randprofils 19 aufgenommen und dort mit Hilfe von entsprechenden Dichtmitteln 43,44 abgedichtet. Die Verbindung zwischen der Entlüftungseinrichtung 37' und den Randprofilen 19 ist als Nut/Feder-Verbindung ausgebildet, wobei die Nut 39 und der Verbindungsabschnitt 38 korrespondierende Rastvorsprünge 40,41 in Form von Rippen aufweisen, die einander in verbundenem Zustand im Sinne einer Rastverbindung hintergreifen.

Die aus dem Paneel 11 verdrängte Luft gelangt über die Strömungskanäle 47 der Entlüftungseinrichtung 37' in die Nuten 39 der Randprofile 19 und von dort über wenigstens eine entsprechende Öffnung 49 in einen Entlüftungskanal 50 der Randprofile 19. Der Entlüftungskanal 50 erstreckt sich längs zu den Randprofilen 19 und mündet in den Entlüftungsspalt 36 zwischen den Randprofilen 19, über den die verdrängte Luft nach außen abgeführt wird. Dieses Prinzip ist bereits beschrieben worden.

## Patentansprüche

1. Paneel (11,11',11") für einen Aufbau (2) eines Nutzfahrzeugs, insbesondere eines Lastkraftwagens, Anhängers oder Sattelaufliegers, mit zwei Decklagen (17), einer Kernlage (18) aus einem geschäumten Kunststoff, wenigstens einem Randprofil (19) an wenigstens einer Schmalseite (16) des Paneels (11,11',11") und wenigstens einer mit dem Randprofil (19) verbundenen Entlüftungseinrichtung (37,37') zum Entlüften des Paneels (11,11',11") beim Ausschäumen des Kunststoffs,
**dadurch gekennzeichnet, dass**
die wenigstens eine Entlüftungseinrichtung (37,37') wenigstens einen zum Inneren des Paneels (11,11',11") geöffneten und sich wenigstens teilweise durch die Entlüftungseinrichtung (37,37') erstreckenden Strömungskanal (47) aufweist und dass die Entlüftungseinrichtung (37,37') wenigstens eine luftdurchlässige den wenigstens einen Strömungskanal (47) wenigstens teilweise verschließende Membran (46) aufweist.

2. Paneel nach Anspruch 1,
**dadurch gekennzeichnet, dass**
die Membran (46) aus einem Fasermaterial, vorzugsweise aus Kunststoff, insbesondere einem Gelege, einem Gewebe, einem Gewirk, einem Vlies und/oder einem Filz, gebildet ist.

3. Paneel nach Anspruch 1 oder 2,
**dadurch gekennzeichnet, dass**
die Membran (46) an dem der Kernlage (18) zugewandten Ende des wenigstens einen Strömungskanals (47) vorgesehen, insbesondere mit einer der Kernlage (18) zugewandten Seite der Entlüftungseinrichtung (37), insbesondere Grundkörpers (45), verklebt ist.

4. Paneel nach einem der Ansprüche 1 bis 3,
**dadurch gekennzeichnet, dass**
der wenigstens eine Strömungskanal (47) in einem, vorzugsweise wenigstens im Wesentlichen aus Kunststoff gebildeten, insbesondere spritzgegossenen, Grundkörper (45) der Entlüftungseinrichtung (37,37') gebildet ist.

5. Paneel nach einem der Ansprüche 1 bis 4,
**dadurch gekennzeichnet, dass**
die wenigstens eine Entlüftungseinrichtung (37,37') wenigstens teilweise, insbesondere über eine formschlüssige Verbindung oder eine Rastverbindung, in einer Nut (39) des Randprofils (19) aufgenommen ist und, vorzugsweise, dass der wenigstens eine Strömungskanal (47) mit der Nut (39) in fluider Kommunikation steht und/oder dass die Entlüftungseinrichtung (37,37') die Nut (39) nach außen wenigstens im Wesentlichen abdichtet.

6. Paneel nach Anspruch 5,
**dadurch gekennzeichnet, dass**
die Nut (39) des Randprofils (19) nach innen gerichtete Rastvorsprünge (41) und die Entlüftungseinrichtung (37,37') nach außen gerichtete Rastvorsprünge (40) aufweisen und dass die Rastvorsprünge (40,41) sich formschlüssig hintergreifen, vorzugsweise miteinander verrastet sind.

7. Paneel nach einem der Ansprüche 1 bis 6,
**dadurch gekennzeichnet, dass**
das Randprofil (19) einen sich in Längsrichtung des Randprofils (19) erstreckenden sowie in fluider Kommunikation stehenden Entlüftungskanal (50) aufweist und, vorzugsweise, dass der Entlüftungskanal (50) über eine Öffnung (49) mit der Nut (39) des Randprofils (19) in fluider Kommunikation steht.

8. Paneel nach einem der Ansprüche 1 bis 7,
**dadurch gekennzeichnet, dass**
wenigstens zwei benachbarte Randprofile (19) des Paneels (11,11',11") unter Bildung eines Entlüftungsspalts (35) zwischen den Randprofilen (19) aneinander angrenzen und, vorzugsweise, dass der Entlüftungsspalt (35) in fluider Kommunikation mit dem Strömungskanal (47) der Entlüftungseinrichtung (37,37') steht.

9. Paneel nach einem der Ansprüche 1 bis 8,
**dadurch gekennzeichnet, dass**
die Verbindung zwischen dem Randprofil (19), insbesondere der Nut (39) des Randprofils (19), und der Entlüftungseinrichtung (37,37'), insbesondere dem in die Nut (39) eingreifenden Verbindungsabschnitts (38), durch ein Dichtmittel (43,44), insbesondere stoffschlüssig, abgedichtet ist.

10. Paneel nach einem der Ansprüche 1 bis 9,
**dadurch gekennzeichnet, dass**
an wenigstens einer Schmalseite (16) des Paneels (11") wenigstens zwei Randprofile (19) angrenzend zueinander vorgesehen und über wenigstens eine Entlüftungseinrichtung (37') miteinander verbunden sind und/oder dass an wenigstens zwei aneinander angrenzenden Schmalseiten (16) des Paneels (11,11') wenigstens zwei über Eck aneinander angrenzende Randprofile (19) vorgesehen und über wenigstens eine Entlüftungseinrichtung (37') miteinander verbunden sind.

11. Paneel nach einem der Ansprüche 1 bis 10,
**dadurch gekennzeichnet, dass**
das Randprofil (19) auf der der Kernlage (18) abgewandten Seite ein Verbindungsprofil (20) zum Verbinden des Paneels (11,11',11") mit einem anderen Paneel (12,13) und/oder mit einem Anbauteil (14,15), insbesondere über eine formschlüssige Verbindung, Rastverbindung und/oder stoffschlüssige Verbindung, aufweist.

12. Paneel nach Anspruch 11,
**dadurch gekennzeichnet, dass**
das Verbindungsprofil (20) des Randprofils (19) wenigstens eine Feder (21) und wenigstens zwei Nuten (24) zur Bildung einer Nut/Feder-Verbindung mit dem anderen Paneel (12,13) und/oder mit dem Anbauteil (14,15) aufweist und, vorzugsweise, dass die wenigstens eine Feder (21) nach außen weisende Rastvorsprünge (22) aufweist.

13. Paneel nach Anspruch 12,
**dadurch gekennzeichnet, dass**
wenigstens eine Feder (21) des Verbindungsprofils (20) zwei gegeneinander sowie senkrecht zum Paneel (11,11',11") verstellbare Federabschnitte (23) aufweist und/oder dass die Decklagen (17) stoffschlüssig mit an die Decklagen (17) angrenzenden Federn (25) verbunden sind.

14. Aufbau (2) eines Nutzfahrzeugs, insbesondere eines Lastkraftwagens, Anhängers oder Sattelaufliegers, mit einem Paneel (11,11',11") und einem mit dem Paneel (11,11',11") verbundenen weiteren Paneel (12,13) und/oder Anbauteil (14,15),
**dadurch gekennzeichnet, dass**
das Paneel (11,11',11") nach einem der Ansprüche 1 bis 13 ausgebildet und mit einer Nut/Feder-Verbindung, insbesondere über eine formschlüssige Verbindung, eine Rastverbindung und/oder eine stoffschlüssige Verbindung, mit dem weiteren Paneel (12,13) und/oder dem Anbauteil (14,15) verbunden ist.

15. Aufbau nach Anspruch 14,
**dadurch gekennzeichnet, dass**
das Anbauteil (14,15) und/oder das weitere Paneel (12,13) wenigstens eine Feder (21,25) und wenigstens eine Nut (24,31,33) zur Bildung einer Nut/Feder-Verbindung aufweisen.

## Claims

1. Panel (11,11',11")for a body (2) of a commercial vehicle, in particular of a heavy goods vehicle, a trailer or a semi-trailer, comprising two top layers (17), a core layer (18) made of a foamed plastics material, at least one edge profile (19) on at least one short side (16) of the panel (11,11',11") and at least one venting device (37,37') for venting the panel (11,11',11") during the foaming of the plastics material,
**characterised in that**
the at least one venting device (37,37') has at least one flow duct (47) which is open to the inside of the panel (11,11',11") and extends at least in part through the venting device (37,37'), and **in that** the venting device (37,37') has at least one air-permeable membrane (46) which closes the at least one flow duct (47) at least in part.

2. Panel according to claim 1,
**characterised in that**
the membrane (46) is formed from a fibrous material, preferably from a plastics material, in particular a laid fabric, a woven fabric, a knitted fabric, a non-woven fabric and/or a felt.

3. Panel according to either claim 1 or 2,
**characterised in that**
the membrane (46) is provided on the end, facing the core layer (18), of the at least one flow duct (47), in particular is bonded to a side of the venting device (37), in particular of the main body (45), which faces the core layer (18).

4. Panel according to any one of claims 1 to 3,
**characterised in that**
the at least one flow duct (47) is formed in a main body (45) of the venting device (37,37'), which body is preferably formed at least substantially from a, in particular injection moulded, plastics material.

5. Panel according to any one of claims 1 to 4,
**characterised in that**
the at least one venting device (37,37') is received at least in part, in particular by means of an interlocking connection or a latching connection, in a groove (39) of the edge profile (19) and, preferably, **in that** the at least one flow duct (47) is in fluid communication with the groove (39) and/or **in that** the venting device (37,37') at least substantially seals the groove (39) towards the outside.

6. Panel according to claim 5,
**characterised in that**
the groove (39) of the edge profile (19) comprises inwardly directed latching projections (41), and the venting device (37,37') comprises outwardly directed latching projections (40), and **in that** the latching projections (40,41) engage behind one another in an interlocking manner, preferably are latched to one another.

7. Panel according to any one of claims 1 to 6,
**characterised in that**
the edge profile (19) comprises a venting duct (50) which extends in the longitudinal direction of the edge profile (19) and is in fluid communication, and, preferably, **in that** the venting duct (50) is in fluid communication with the groove (39) of the edge profile (19) by means of an opening (49).

8. Panel according to any one of claims 1 to 7,
**characterised in that**
at least two adjacent edge profiles (19) of the panel (11,11',11") adjoin one another, thereby forming a venting gap (35) between the edge profiles (19), and, preferably, **in that** the venting gap (35) is in fluid communication with the flow duct (47) of the venting device (37,37').

9. Panel according to any one of claims 1 to 8,
**characterised in that**
the connection between the edge profile (19), in particular the groove (39) of the edge profile (19), and the venting device (37,37'), in particular the connection portion (38) engaging in the groove (39), is sealed, in particular integrally, by a sealing means (43,44).

10. Panel according to any one of claims 1 to 9,
**characterised in that**
on at least one short side (16) of the panel (11"), at least two edge profiles (19) are provided adjoining one another and are interconnected by means of at least one venting device (37'), and/or **in that** on at least two short sides (16) of the panel (11,11') which adjoin one another, at least two edge profiles (19) are provided adjoining one another over a corner and are interconnected by means of at least one venting device (37').

11. Panel according to any of claims 1 to 10,
**characterised in that**
the edge profile (19), on the side facing away from the core layer (18), comprises a connection profile (20) for connecting the panel (11,11',11") to another panel (12,13) and/or to a mounting part (14,15), in particular by means of an interlocking connection, a latching connection and/or an integrally bonded connection.

12. Panel according to claim 11,
**characterised in that**
the connection profile (20) of the edge profile (19) comprises at least one tongue (21) and at least two grooves (24) for forming a tongue-and-groove connection with the other panel (12,13) and/or with the mounting part (14,15), and, preferably, **in that** the at least one tongue (21) comprises outwardly pointing latching projections (22).

13. Panel according to claim 12,
**characterised in that**
at least one tongue (21) of the connection profile (20) comprises two tongue portions (23) which can be adjusted against one another and perpendicularly to the panel (11,11',11"), and/or **in that** the top layers (17) are connected to tongues (25) which adjoin the top layers (17) in an integrally bonded manner.

14. Body (2) of a commercial vehicle, in particular of a heavy goods vehicle, a trailer or a semi-trailer, comprising a panel (11,11',11") and an additional panel (12,13) and/or mounting part (14,15) which is connected to the panel (11,11',11"),
**characterised in that**
the panel (11,11',11") is formed according to any of claims 1 to 13 and is connected by means of a tongue-and-groove connection, in particular by means of an interlocking connection, a latching connection and/or an integrally bonded connection, to the additional panel (12,13) and/or the mounting part (14,15).

15. Body according to claim 14,
**characterised in that**
the mounting part (14,15) and/or the additional panel (12,13) comprises at least one tongue (21,25) and at least one groove (24,31,33) for forming a tongue-and-groove connection.

## Revendications

1. Panneau (11, 11', 11") pour un assemblage (2) d'un véhicule utilitaire, en particulier un poids lourd, une remorque ou une semi-remorque, avec deux couches de recouvrement (17), une couche centrale (18) en une matière synthétique moussée, au moins un profil de rebord (19) sur au moins un côté étroit (16) du panneau (11, 11', 11") et au moins un dispositif d'aération (37, 37'), relié au profil de rebord (19), pour désaérer le panneau (11, 11', 11") lors du moussage de la matière synthétique,
**caractérisé en ce que**
le au moins un dispositif d'aération (37, 37') présente au moins un canal d'écoulement (47) ouvert vers l'intérieur du panneau (11, 11', 11") et s'étendant, au moins en partie, à travers le dispositif d'aération (37, 37') et **en ce que** le dispositif d'aération (37, 37') présente au moins une membrane (46) perméable à l'air pouvant obturer, au moins en partie, le au moins un canal d'écoulement (47).

2. Panneau selon la revendication 1,
**caractérisé en ce que**
la membrane (46) est composée d'un matériau fibreux, de préférence en matière synthétique, en particulier une mailles, un tissu, un tricot, un non-tissé et/ou un feutre.

3. Panneau selon la revendication 1 ou 2,
**caractérisé en ce que**
la membrane (46) est prévue sur l'extrémité d'au moins un canal d'écoulement (47) faisant face à la couche centrale (18), en particulier étant collée à un côté du dispositif d'aération (37), en particulier d'un corps de base (45), faisant face à la couche centrale (18).

4. Panneau selon l'une des revendications 1 à 3,
**caractérisé en ce que**
le au moins un canal d'écoulement (47) est formé dans un corps de base (45) du dispositif d'aération (37, 37'), conçu de préférence, au moins essentiellement, en matière synthétique, en particulier moulé par injection,.

5. Panneau selon l'une des revendications 1 à 4,
**caractérisé en ce que**
le au moins un dispositif d'aération (37, 37') est incorporé, au moins partiellement, en particulier au moyen d'un assemblage par liaison de forme ou un assemblage par encliquetage, dans une rainure (39) du profil de rebord (19) et, de préférence, **en ce que** le au moins un canal d'écoulement (47) est en communication fluidique avec la rainure (39) et/ou **en ce que** le dispositif d'aération (37, 37') assure l'étanchéité, au moins essentiellement, de la rainure (39) vers l'extérieur.

6. Panneau selon la revendication 5,
**caractérisé en ce que**
la rainure (39) du profil de rebord (19) présente des saillies d'encliquetage dirigées vers l'intérieur (41) et le dispositif d'aération (37, 37') présente des saillies d'encliquetage dirigées vers l'extérieur (40) et **en ce que** les saillies d'encliquetage (40, 41) viennent en prise par derrière par liaison de forme, et sont, de préférence, mutuellement encliquetées.

7. Panneau selon l'une des revendications 1 à 6,
**caractérisé en ce que**
le profil de rebord (19) présente un canal de ventilation (50) s'étendant en direction longitudinale du profil de rebord (19) et étant en communication fluidique et, de préférence, **en ce que** le canal de ventilation (50) est en communication fluidique, par l'intermédiaire d'une ouverture (49), avec la rainure (39) du profil de rebord (19).

8. Panneau selon l'une des revendications 1 à 7,
**caractérisé en ce que**
au moins deux profils de rebord adjacents (19) du panneau (11, 11', 11") jouxtent l'un à l'autre grâce à la formation d'une fente de désaération (35) entre les profils de rebord (19) et, de préférence, **en ce que** la fente de désaération (35) est en communication fluidique avec le canal d'écoulement (47) du dispositif d'aération (37, 37').

9. Panneau selon l'une des revendications 1 à 8,
**caractérisé en ce que**
l'assemblage entre le profil de rebord (19), en particulier la rainure (39) du profil de rebord (19), et le dispositif d'aération (37, 37'), en particulier la section d'assemblage (38) étant en prise avec la rainure (39), est scellé hermétiquement par un dispositif d'étanchéité (43, 44), en particulier par liaison de matière.

10. Panneau selon l'une des revendications 1 à 9,
**caractérisé en ce que**
l'on prévoit sur au moins un côté étroit (16) du panneau (11") au moins deux profils de rebord (19) adjacents l'un à l'autre et qui sont mutuellement reliés par l'intermédiaire d'au moins un dispositif d'aération (37') et/ou **en ce qu'**au moins deux profils de rebord (19) adjacents l'un à l'autre sur l'angle sont prévus sur au moins deux adjacents côtés étroits (16) du panneau (11, 11') et qui sont mutuellement reliés au moyen d'au moins un dispositif d'aération (37').

11. Panneau selon l'une des revendications 1 à 10,
**caractérisé en ce que**
le profil de rebord (19) sur le côté opposé à la couche centrale (18) présente un profil d'accouplement (20) pour l'assemblage du panneau (11, 11', 11") avec un autre panneau (12, 13) et/ou avec une pièce jointe (14, 15), en particulier au moyen d'un assemblage par liaison de forme, assemblage par encliquetage et/ou assemblage par liaison de matière.

12. Panneau selon la revendication 11,
**caractérisé en ce que**
le profil d'accouplement (20) du profil de rebord (19) présente au moins une languette (21) et au moins deux rainures (24) pour la formation d'une liaison à rainure et languette avec l'autre panneau (12, 13) et/ou avec la pièce jointe (14, 15) et, de préférence, **en ce que** la au moins une languette (21) présente des saillies d'encliquetage dirigées vers l'extérieur (22).

13. Panneau selon la revendication 12,
**caractérisé en ce que**
au moins une languette (21) du profil d'accouplement (20) présente deux sections de languette (23) déplaçables l'une par rapport à l'autre ainsi que verticalement par rapport au panneau (11, 11', 11") et/ou **en ce que** les couches de recouvrement (17) sont reliées par liaison de matière avec les languettes (25) adjacentes aux couches de recouvrement (17).

14. Assemblage (2) d'un véhicule utilitaire, en particulier un poids lourd, remorque ou semi-remorque, avec un panneau (11, 11', 11") et un autre panneau (12, 13), relié au panneau (11, 11', 11"), et/ou pièce joint (14, 15),
**caractérisé en ce que**
le panneau (11, 11', 11") est conçu selon l'une des revendications 1 à 13 et est relié avec une liaison à rainure et languette, en particulier au moyen d'un assemblage par liaison de forme, un assemblage par encliquetage et/ou un assemblage par liaison de matière, avec l'autre panneau (12,13) et/ou pièce joint (14,15).

15. Panneau selon la revendication 14,
**caractérisé en ce que**
la pièce joint (14, 15) et/ou l'autre panneau (12, 13) présentent au moins une languette (21, 25) et au moins une rainure (24, 31, 33) pour former une liaison à rainure et languette.
